# EUROPEAN PATENT SPECIFICATION

(11) **EP 3 075 510 B1**
(45) Date of publication and mention of the grant of the patent: **24.04.2019**
(21) Application number: 15846341.4
(22) Date of filing: 24.08.2015
(51) Int. Cl.: B29C 43/52

(54) **ROLLING DEVICE WITH A SENSOR UNIT**
WALZVORRICHTUNG MIT EINER SENSOREINHEIT
DISPOSITIF DE CALANDRAGE AVEC UNE UNITÉ DÉTECTEUR

(30) Priority: 03.10.2014 JP 2014204924
(43) Date of publication of application: 05.10.2016
(73) Proprietor: IHI Corporation, Tokyo 135-8710 (JP); IHI Logistics & Machinery Corporation, Koto-ku Tokyo 135-0061 (JP)
(72) Inventor: OKABE, Michinari, Tokyo 135-6009 (JP); NEAGARI, Naoyuki, Tokyo 135-6009 (JP)
(74) Representative: Lamb, Martin John Carstairs
(86) International application number: PCT/JP2015/073717
(87) International publication number: WO 2016/052003

(56) References cited:
- EP-A1- 0 091 586
- EP-A1- 0 560 142
- GB-A- 1 561 700
- JP-A- H0 839 593
- JP-A- S5 155 764
- JP-A- S5 411 058
- JP-A- H09 234 755
- JP-A- S52 104 147
- JP-A- S55 158 814
- JP-A- 2004 286 696
- JP-A- 2014 163 844
- US-A- 3 353 385

## Description

### Technical Field

The present disclosure relates to a rolling mill with a sensor unit.

### Background Art

Patent Literature 1 discloses a calender that supplies a material between a pair of rolls and rolls the material to manufacture a sheet-like product having a substantially uniform thickness. In order to make the thickness of the product substantially uniform, a gap between the pair of rolls needs to be kept constant. In this regard, in the calender described in Patent Literature 1, the gap between the pair of rolls is measured by using a non-contact type distance sensor. A rolling mill according to the preamble of claim 1 can be seen in the patent specification GB 1 561 700. Attention is also drawn to the disclosures of US3353385 and EP0560142.

### Citation List

### Patent Literature

Patent Literature 1: Japanese Unexamined Patent Publication No. H6-055561.

### Summary of Invention

### Technical Problem

In recent years, in order to improve quality of a product manufactured by rolling a material with a pair of rolls, uniformity of the thickness of the product needs to be controlled with higher accuracy.

In this regard, the present disclosure describes a rolling mill and a sensor unit capable of detecting a gap between a pair of rolls with very high accuracy for obtaining a product having a more uniform thickness.

### Solution to Problem

The objectives of the invention are achieved by the apparatus according to the appended claim 1. Preferred embodiments are disclosed in the dependent claims.

A rolling mill according to the present invention comprises: first and second rolls adjacent to each other; a first axle box rotatably supporting a shaft of the first roll; a second axle box rotatably supporting a shaft of the second roll and adjacent to the first axle box; an adjustment part configured to adjust a position of the first axle box so as to bring the first roll and the second roll close to or apart from each other; a sensor unit interposed between the first axle box and the second axle box and in contact with both the first axle box and the second axle box; a control unit, wherein the sensor unit includes a distance sensor including an extension/contraction part configured to extend and contract in one direction in which the first and second axle boxes are aligned, and the control unit is configured to control the adjustment part based on an extension/contraction amount of the extension/contraction part,the sensor unit further includes: a first member holding the distance sensor; and a second member abutting on the extension/contraction part and attached to the first member slidably along the one direction, one of the first and second members is fixed to one of the first and second axle boxes, and the other of the first and second members is not fixed to the other of the first and second axle boxes and includes a contact surface that is movable within a surface of the other of the first and second axle boxes while abutting on the surface.

[DELETED]

### Effects of Invention

According to the rolling mill and the sensor unit of the present disclosure, a gap between a pair of rolls can be detected with very high accuracy.

### Brief Description of Drawings

FIG. 1 is a side view illustrating a schematic of a calender.
FIG. 2 is a side view schematically illustrating mainly a relation between rolls and sensor units.
(a) of FIG. 3 is a schematic view illustrating a pair of rolls viewed from an oblique direction and (b) of FIG. 3 is a view illustrating the pair of rolls overlapping with each other.
(a) of FIG. 4 is a view illustrating a cross-section of the sensor unit and (b) of FIG. 4 is a view illustrating a cross-section taken along line B-B in (a) of FIG. 4.

### Description of Embodiments

An embodiment according to the present disclosure which will be described below is an example for describing the present invention. The present invention, therefore, should not be limited to the following contents.

### [1] Overview of Embodiment

A rolling mill according to one aspect of the present embodiment includes: first and second rolls adjacent to each other; a first axle box rotatably supporting a shaft of the first roll; a second axle box rotatably supporting a shaft of the second roll and adjacent to the first axle box; an adjustment part that adjusts a position of the first axle box so as to bring the first roll and the second roll close to or apart from each other; a sensor unit interposed between the first axle box and the second axle box and in contact with both the first axle box and the second axle box; and a controller. The sensor unit includes: a distance sensor including an extension/contraction part that extends and contracts in one direction in which the first and second axle boxes are aligned; a first member holding the distance sensor; and a second member abutting on the extension/contraction part and attached to the first member slidably along the one direction. The controller controls the adjustment part based on an extension/contraction amount of the extension/contraction part.

In a rolling mill according to one aspect of the present embodiment, a sensor unit is interposed between a first axle box and a second axle box and in contact with both the first axle box and the second axle box. The sensor unit includes: a distance sensor including an extension/contraction part that extends and contracts in one direction in which the first and second axle boxes are aligned; a first member holding the distance sensor; and a second member abutting on the extension/contraction part and attached to the first member slidably along the one direction. Therefore, when the first and second axle boxes approach each other, the second member slides in the one direction by the extent of the approach, whereby the extension/contraction part contracts in the one direction. On the other hand, when the first and second axle boxes separate from each other, the second member slides in the one direction by the extent of the separation, whereby the extension/contraction part extends in the one direction. In this manner, a moving amount of the first and second axle boxes in the one direction can be directly measured as an extension/contraction amount of the extension/contraction part. By using the sensor unit, therefore, a gap between a pair of rolls can be detected with very high accuracy.

Two sensor units may be arranged such that a virtual straight line connecting a shaft of the first roll and a shaft of the second roll is positioned between the two sensor units. In this case, even if one of the first and second axle boxes is inclined with respect to the other, the gap between the pair of rolls can be detected with very high accuracy by using, for example, an average of two values of the extension/contraction amount measured by the two sensor units.

One of the first and second members is fixed to one of the first and second axle boxes, and the other of the first and second members is not fixed to the other of the first and second axle boxes and includes a contact surface that is movable within a surface of the other of the first and second axle boxes while abutting on the surface. In this case, even if one of the first and second rolls moves so as to be displaced with respect to the other in a virtual plane orthogonal to the one direction, the contact surface also moves, following to that movement, within the surface of the other of the first and second axle boxes while abutting on the surface. Therefore, occurrence of a load on the sensor unit in a direction along the virtual plane can be suppressed. Since an extension/contraction direction of the extension/contraction part is maintained in the one direction, even when the above-mentioned displacement occurs between the first and second rolls, the gap between the pair of rolls can be detected with very high accuracy.

The sensor unit may further include a supply path for supplying cooling gas to the distance sensor. Since the first and second rolls are heated during operation of the rolling mill, if the distance sensor is heated by that heat, an output value from the distance sensor might fluctuate due to a temperature drift. In the above-mentioned case, however, the distance sensor can be cooled down by the cooling gas through the supply path. Therefore, the gap between the pair of rolls can be detected with higher accuracy.

A sensor unit according to another aspect of the present embodiment includes: a distance sensor including an extension/contraction part that extends and contracts in one direction; a first member holding the distance sensor and abutting on one of a pair of measurement objects; and a second member abutting on the extension/contraction part, attached to the first member slidably along the one direction, and abutting on the other of the pair of measurement objects.

In the sensor unit according to another aspect of the present embodiment, when the pair of measurement objects approach each other, the second member slides in the one direction by the extent of the approach, whereby the extension/contraction part contracts in the one direction. On the other hand, when the pair of measurement objects separate from each other, the second member slides in the one direction by the extent of the separation, whereby the extension/contraction part extends in the one direction. In this manner, a moving amount of the pair of measurement objects in the one direction can be directly measured as an extension/contraction amount of the extension/contraction part. By using the sensor unit, therefore, a separation distance between the pair of measurement objects can be detected with very high accuracy.

One of the first and second members may be fixed to one of the pair of measurement objects that separates from each other in the one direction, and the other of the first and second members may not be fixed to the other of the pair of measurement objects and may include a contact surface that is movable within a surface of the other of the pair of measurement objects while abutting on the surface. In this case, even if one of the pair of measurement objects moves so as to be displaced with respect to the other in a virtual plane orthogonal to the one direction, the contact surface also moves, following to that movement, within the surface of the other of the pair of measurement objects while abutting on the surface. Therefore, occurrence of a load on the sensor unit in a direction along the virtual plane can be suppressed. Since an extension/contraction direction of the extension/contraction part is maintained in the one direction, even when the above-mentioned displacement occurs in the pair of measurement objects, the separation distance between the pair of measurement objects can be detected with very high accuracy.

A supply path for supplying cooling gas to the distance sensor may further be included. Depending on the environment where the sensor unit is attached, the distance sensor might be heated by the ambient heat during use of the sensor unit. At this time, an output value from the distance sensor might fluctuate due to a temperature drift. In the above-mentioned case, however, the distance sensor can be cooled down by the cooling gas through the supply path. Therefore, the separation distance between the pair of measurement objects can be detected with higher accuracy.

### [2] Example of Embodiment

Hereinafter, an example of a calender 1 of an embodiment according to the present disclosure will be described in more detail with reference to the drawings. In the following description, identical elements or elements having identical functions will be provided with the same reference signs, and overlapping descriptions will be omitted. Dimensions and ratios of the respective elements are not limited to the illustrated ratios.

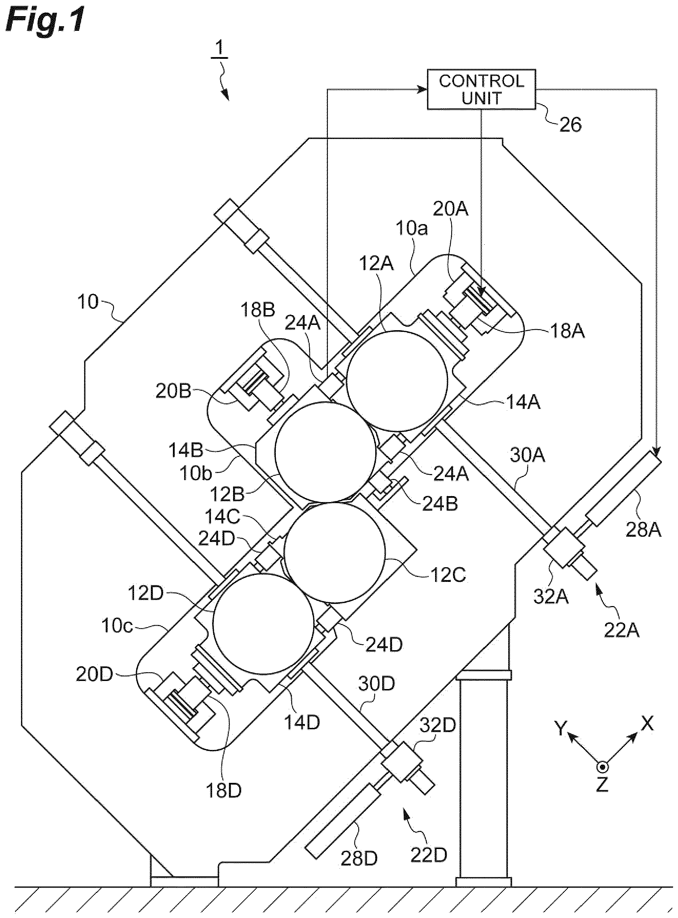

The calender 1 includes, as illustrated in FIG. 1, a frame 10, rolls (measurement objects) 12A to 12D, axle boxes 14A to 14D, hydraulic cylinders (adjustment parts) 18A, 18B, 18D, roll cross mechanisms 22A, 22D, sensor units 24A, 24B, 24D, and a control unit (controller) 26.

The frame 10 is provided on a floor surface. The frame 10 includes openings 10a to 10c. The opening 10a extends, when viewed from the side, along an X direction inclined with respect to the floor surface. The opening 10b extends, when viewed from the side, along a Y direction orthogonal to the X direction. The opening 10b crosses the opening 10a. The opening 10c extends along the X direction toward an opposite side of the opening 10a with respect to the opening 10b. The opening 10c is not positioned on the same straight line as the opening 10a. The opening 10c crosses the opening 10b.

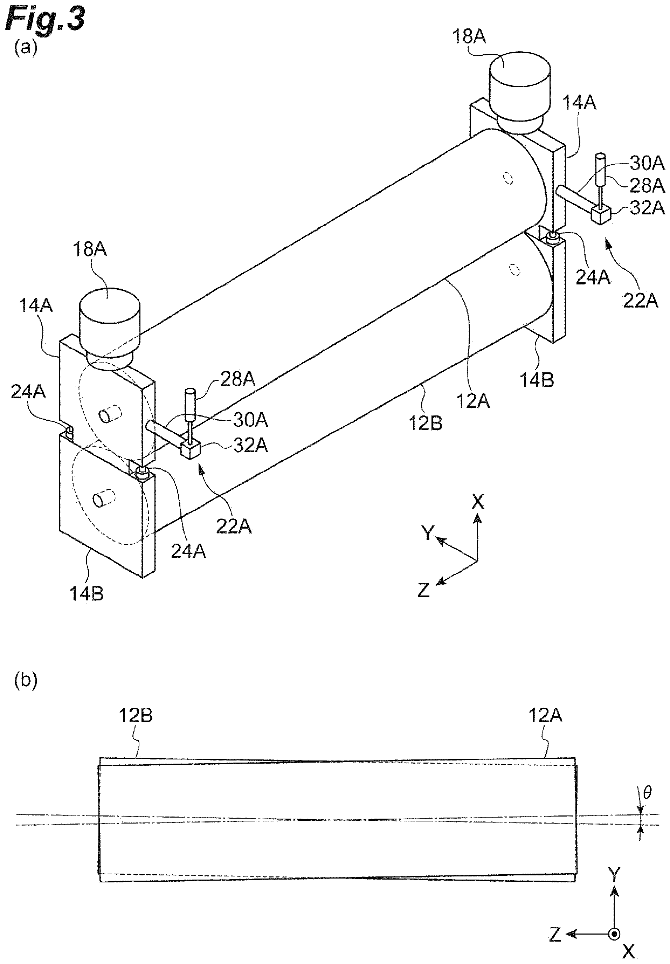

The roll 12A is arranged within the opening 10a. The roll 12A is formed in a cylindrical shape. The roll 12A extends in a Z direction (vertical direction with respect to a paper surface of FIG. 1) orthogonal to both the X direction and the Y direction. The roll 12A is rotatably supported by a pair of the axle boxes 14A via a shaft part extending along an axial direction of the roll 12A from both ends (refer to (a) of FIG. 3). The pair of axle boxes 14A is attached to the frame 10 via a slider (not illustrated) within the opening 10a. This allows the roll 12A to move in an extending direction of the opening 10a (X direction) within the opening 10a.

The hydraulic cylinder 18A is attached to the frame 10 via a housing 20A. The hydraulic cylinder 18A is positioned at an end part of the opening 10a, the end part being distanced from the openings 10b, 10c in the X direction. A piston of the hydraulic cylinder 18A is connected to an end edge of the axle box 14A, the end edge being positioned at an opposite side of the axle box 14B in the X direction. The hydraulic cylinder 18A pushes and pulls the roll 12A in the X direction via the axle box 14A based on a signal from the control unit 26.

The roll cross mechanism 22A includes a motor 28A, a shaft 30A, and a gear box 32A. The motor 28A is attached to the outside of the frame 10. The shaft 30A extends from the outside of the frame 10 to the opening 10a along the Y direction. A distal end of the shaft 30A is connected to a side edge of the axle box 14A, the side edge being extending in the X direction. The gear box 32A converts rotary motion of the motor 28A into linear motion of the shaft 30A in the Y direction. The motor 28A, therefore, moves the shaft 30A forward and backward in the Y direction based on a signal from the control unit 26 to push and pull the axle box 14A in the Y direction. Consequently, the roll 12A is inclined, when viewed from a direction in which the adjacent rolls 12A, 12B are aligned (X direction), by a predetermined angle θ with respect to the roll 12B (refer to (b) FIG. 3).

After the roll 12A is inclined with respect to the roll 12B, and when a material is not supplied to the calender 1, a gap between the rolls 12A, 12B is narrowed at a central part of the rolls 12A, 12B, and widened at both end parts of the rolls 12A, 12B. On the other hand, when a material is supplied between the rolls 12A, 12B, the gap at the central part of the rolls 12A, 12B is expanded, whereby the central part of the rolls 12A, 12B bends outward. Consequently, the gap between the rolls 12A, 12B becomes substantially constant, whereby the material can be formed to have a substantially uniform thickness after the material passes between the rolls 12A, 12B to be rolled.

The roll 12B is arranged within the opening 10b. The roll 12B is formed in a cylindrical shape. The roll 12B extends in the Z direction (vertical direction with respect to the paper surface of FIG. 1). The roll 12B is rotatably supported by a pair of the axle boxes 14B via a shaft part extending along an axial direction of the roll 12B from both ends (refer to (a) of FIG. 3). The pair of axle boxes 14B is attached to the frame 10 via a slider (not illustrated) within the opening 10b. This allows the roll 12B to move in an extending direction of the opening 10b (Y direction) within the opening 10b. The pair of axle boxes 14B is adjacent to the pair of axle boxes 14A in the X direction.

The hydraulic cylinder 18B is attached to the frame 10 via a housing 20B. The hydraulic cylinder 18B is positioned at an end part of the opening 10b, the end part being distanced from the openings 10a, 10c in the Y direction. A piston of the hydraulic cylinder 18B is connected to an end edge of the axle box 14B, the end edge being positioned at an opposite side of the axle box 14C in the Y direction. The hydraulic cylinder 18B pushes and pulls the roll 12B in the Y direction via the axle box 14B based on a signal from the control unit 26.

The roll 12C is arranged within the opening 10c. The roll 12C is formed in a cylindrical shape. The roll 12C extends in the Z direction (vertical direction with respect to the paper surface of FIG. 1). The roll 12C is rotatably supported by a pair of the axle boxes 14C via a shaft part extending along an axial direction of the roll 12C from both ends. The pair of axle boxes 14C is positioned at an end part of the opening 10c, the end part being close to the openings 10a, 10b. The pair of axle boxes 14C is fixed within the opening 10c. The roll 12C, therefore, does not move within the opening 10c. The pair of axle boxes 14C is adjacent to the pair of axle boxes 14B in the Y direction.

The roll 12D is arranged within the opening 10c. The roll 12D is formed in a cylindrical shape. The roll 12D extends in the Z direction (vertical direction with respect to the paper surface of FIG. 1) orthogonal to both the X direction and the Y direction. The roll 12D is rotatably supported by a pair of the axle boxes 14D via a shaft part extending along an axial direction of the roll 12D from both ends. The pair of axle boxes 14D is attached to the frame 10 via a slider (not illustrated) within the opening 10c. This allows the roll 12D to move in an extending direction of the opening 10c (X direction) within the opening 10c. The pair of axle boxes 14D is adjacent to the pair of axle boxes 14C in the X direction.

The hydraulic cylinder 18D is attached to the frame 10 via a housing 20D. The hydraulic cylinder 18D is positioned at an end part of the opening 10c, the end part being distanced from the openings 10a, 10b in the X direction. A piston of the hydraulic cylinder 18D is connected to an end edge of the axle box 14D, the end edge being positioned at an opposite side of the axle box 14C in the X direction. The hydraulic cylinder 18D pushes and pulls the roll 12D in the X direction via the axle box 14D based on a signal from the control unit 26.

The roll cross mechanism 22D includes a motor 28D, a shaft 30D, and a gear box 32D. The motor 28D is attached to the outside of the frame 10. The shaft 30D extends from the outside of the frame 10 to the opening 10c along the Y direction. A distal end of the shaft 30D is connected to a side edge of the axle box 14D, the side edge being extending in the X direction. The gear box 32D converts rotary motion of the motor 28D into linear motion of the shaft 30D in the Y direction. The motor 28D, therefore, moves the shaft 30D forward and backward in the Y direction based on a signal from the control unit 26 to push and pull the axle box 14D in the Y direction. Consequently, the roll 12D is inclined, when viewed from a direction in which the adjacent rolls 12C, 12D are aligned (X direction), by a predetermined angle with respect to the roll 12C.

After the roll 12D is inclined with respect to the roll 12C, and when a material is not supplied to the calender 1, a gap between the rolls 12C, 12D is narrowed at a central part of the rolls 12C, 12D, and widened at both end parts of the rolls 12C, 12D. On the other hand, when a material is supplied between the rolls 12C, 12D, the gap at the central part of the rolls 12C, 12D is expanded, whereby the central part of the rolls 12C, 12D bends outward. Consequently, the gap between the rolls 12C, 12D becomes substantially constant, whereby the material can be formed to have a substantially uniform thickness after the material passes between the rolls 12C, 12D to be rolled.

The sensor unit 24A is interposed between the axle box 14A and the axle box 14B and in contact with both the axle box 14A and the axle box 14B (refer to FIGS. 1 to 3). Two sensor units 24A are arranged between the axle box 14A and the axle box 14B so as to be aligned in the Y direction. The two sensor units 24A are arranged such that a virtual straight line connecting the shaft of the roll 12A and the shaft of the roll 12B is positioned between the two sensor units 24A.

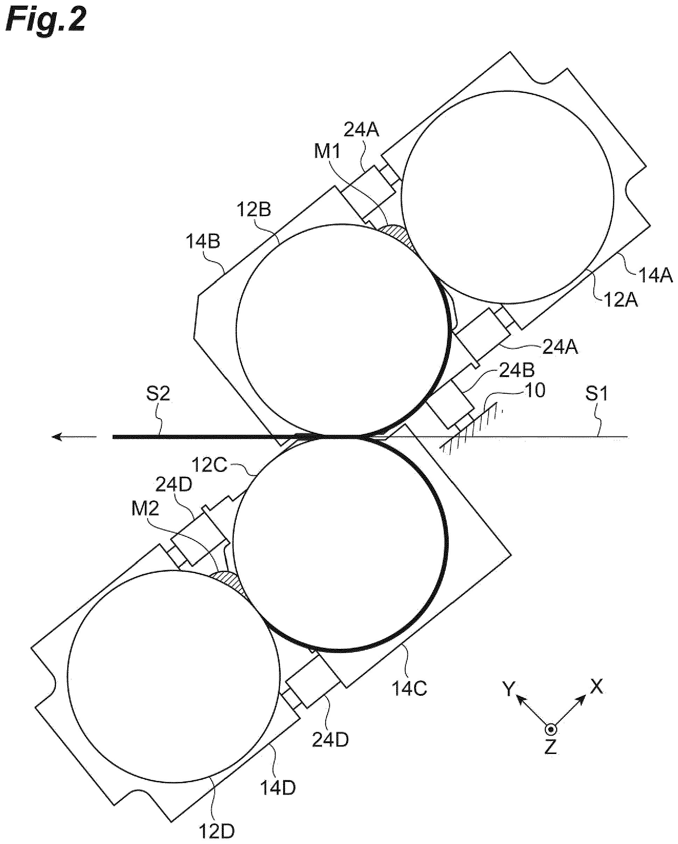

The sensor unit 24B is interposed between the axle box 14B and the frame 10 and in contact with both the axle box 14B and the frame 10 (refer to FIGS. 1 and 2). The sensor unit 24B is positioned at a side edge of the axle box 14B, the side edge being at an opposite side of the hydraulic cylinder 18B in the Y direction.

The sensor unit 24D is interposed between the axle box 14C and the axle box 14D and in contact with both the axle box 14C and the axle box 14D (refer to FIGS. 1 and 2). Two sensor units 24D are arranged between the axle box 14C and the axle box 14D so as to be aligned in the Y direction. The two sensor units 24D is arranged such that a virtual straight line connecting the shaft of the roll 12C and the shaft of the roll 12D is positioned between the two sensor units 24D.

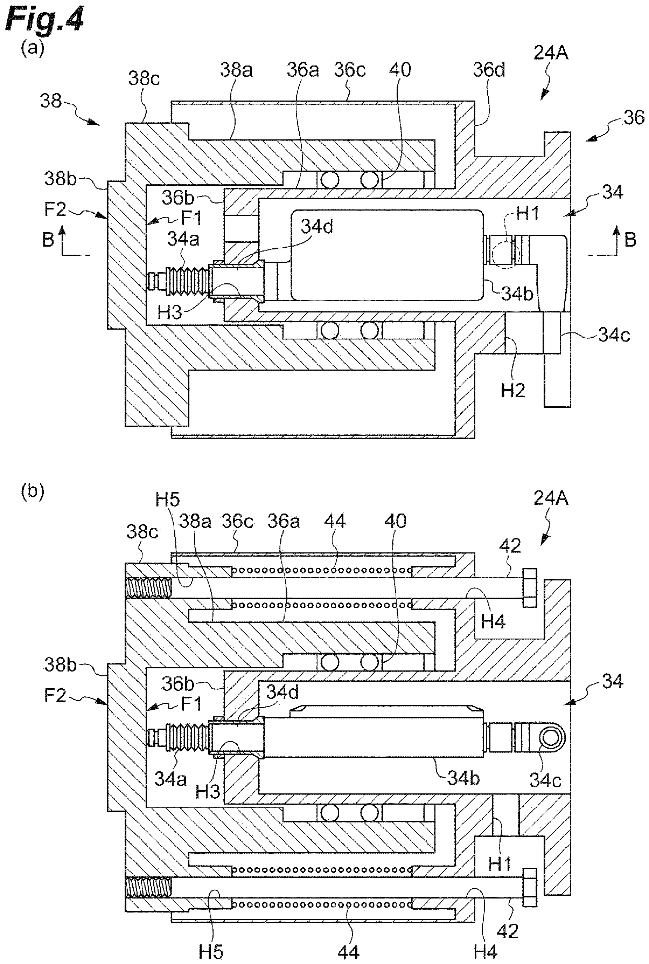

The configurations of the sensor units 24A, 24B, 24D will be described in more detail. Since the configurations of the sensor units 24A, 24B, 24D are similar, the configuration of the sensor unit 24A will be described hereinafter with reference to FIG. 4, and descriptions of the other sensor units 24B, 24D will be omitted.

The sensor unit 24A includes a distance sensor 34, a case (first member) 36, a case (second member) 38, a guide member 40, two bolts 42, and two coil springs 44. The distance sensor 34 includes an extension/contraction part 34a and a sensor body part 34b. The extension/contraction part 34a can extend and contract in its length direction (left-right direction of FIG. 4). The extension/contraction part 34a contracts when external force is applied in its length direction, and is restored to the original length when the external force is removed. The sensor body part 34b is coupled to the extension/contraction part 34a via a coupling member 34d formed in a cylindrical shape. The sensor body part 34b converts an extension/contraction amount of the extension/contraction part 34a into an electric signal. In the sensor unit 24A, an extension/contraction direction of the extension/contraction part 34a is a direction in which the axle boxes 14A, 14B are adjacent to each other (X direction).

The case 36 includes an inner cylindrical part (first member) 36a, a bottom wall (first member) 36b, an outer cylindrical part 36c, and a connection wall 36d. The inner cylindrical part 36a houses the sensor body part 34b. Two through holes (supply paths) HI, H2 are formed, at different positions, in a side wall of the inner cylindrical part 36a. One end of the inner cylindrical part 36a is fixed to one of the axle boxes 14A, 14B.

The through hole H1 is connected to a gas supply source (not illustrated). Cooling gas (for example, air) is introduced from the through hole H1 into the inner cylindrical part 36a. The cooling gas received heat from the sensor body part 34b within the inner cylindrical part 36a is discharged from the inner cylindrical part 36a through the through hole H2. The through hole H2 is also used for taking a signal line 34c connected to the sensor body part 34b out of the sensor unit 24A.

The bottom wall 36b closes the other end of the inner cylindrical part 36a. A through hole H3 through which the inside and the outside of the inner cylindrical part 36a communicate with each other is formed in the bottom wall 36b. The coupling member 34d is inserted into the through hole H3 so that the extension/contraction part 34a is positioned outside the inner cylindrical part 36a and the sensor body part 34b is positioned inside the inner cylindrical part 36a. The coupling member 34d, therefore, is supported by the through hole H3. More specifically, the distance sensor 34 is held by the inner cylindrical part 36a.

The outer cylindrical part 36c is positioned outside the inner cylindrical part 36a and extends on the same axis as the inner cylindrical part 36a. The connection wall 36d connects the inner cylindrical part 36a and the outer cylindrical part 36c. In the connection wall 36d, four through holes H4 extending in the extension/contraction direction of the extension/contraction part 34a are formed.

The case 38 includes a cylindrical part (second member) 38a, a bottom wall (second member) 38b, and a flange part 38c. The cylindrical part 38a is positioned between the inner cylindrical part 36a and the outer cylindrical part 36c. The cylindrical part 38a extends on the same axis as the inner cylindrical part 36a and the outer cylindrical part 36c.

The bottom wall 38b closes one end of the cylindrical part 38a. A distal end of the extension/contraction part 34a abuts on an inner surface F1 of the bottom wall 38b, the inner surface F1 being facing the inner cylindrical part 36a. An outer surface F2 of the bottom wall 38b is not fixed to the other of the axle boxes 14A, 14B. The outer surface F2 is a contact surface that is movable within a surface of the other of the axle boxes 14A, 14B while abutting on the surface.

The flange part 38c is formed in an annular shape and extends toward the outside of the cylindrical part 38a. In the flange part 38c, four through holes H5 extending in the extension/contraction direction of the extension/contraction part 34a are formed. Each of the through holes H5 overlaps with the corresponding through hole H4 when viewed from the extension/contraction direction of the extension/contraction part 34a.

The guide member 40 is interposed between an outer peripheral surface of the inner cylindrical part 36a and an inner peripheral surface of the cylindrical part 38a. The guide member 40 supports the cylindrical part 38a rotatably with respect to the inner cylindrical part 36a, and supports the cylindrical part 38a in a guidable manner with respect to the inner cylindrical part 36a in the extension/contraction direction of the extension/contraction part 34a. Therefore, the cylindrical part 38a (case 38) is attached to the inner cylindrical part 36a (case 36) via the guide member 40.

The bolts 42 are inserted into the respective through holes H4, H5. A distal end of the bolt 42 is screwed with the flange part 38c. Therefore, the bolt 42 also has a function to guide the cylindrical part 38a with respect to the inner cylindrical part 36a in the extension/contraction direction of the extension/contraction part 34a.

The coil springs 44 are inserted into the respective bolts 42. The coil spring 44 is arranged between the connection wall 36d and the flange part 38c. The coil springs 44 apply pressing force between the connection wall 36d and the flange part 38c in a direction that the connection wall 36d and the flange part 38c separate from each other.

The sensor unit 24A having the above-mentioned configuration is arranged between the axle boxes 14A, 14B, with the extension/contraction part 34a contracted by a predetermined amount and not completely contracted (hereinafter referred to as a "reference state"). When a separation distance between the axle boxes 14A, 14B is increased, therefore, the extension/contraction part 34a also extends accordingly. As a result, the distance sensor 34 detects an extension amount of the extension/contraction part 34a relative to the reference state, and calculates the gap between the adjacent rolls 12A, 12B based on the extension amount. On the other hand, when the separation distance between the axle boxes 14A, 14B is decreased, the extension/contraction part 34a also contracts accordingly. As a result, the distance sensor 34 detects a contraction amount of the extension/contraction part 34a relative to the reference state, and calculates the gap between the adjacent rolls 12A, 12B based on the contraction amount. In this manner, the distance sensor 34 measures the gap between the adjacent rolls 12A, 12B based on the extension/contraction amount of the extension/contraction part 34a.

Returning to FIG. 1, the control unit 26 includes one or more controlling computers to control the calender 1. The control unit 26 has a processing unit (not illustrated) and a reading unit (not illustrated). The processing unit executes a control process for each component of the calender 1 based on a control condition. The reading unit reads a program from a computer-readable recoding medium. The program stored in the recording medium is a program for causing each component of the calender 1 to execute the control process. Examples of the recording medium may include a semiconductor memory, an optical recording disk, a magnetic recording disk, and a magneto-optical recording disk.

Specifically, the control unit 26 controls the calender 1 to roll, with the rolls 12B, 12C, a sheet-like substrate S1 together with a material M1 supplied between the rolls 12A, 12B and M2 supplied between the rolls 12C, 12D, thereby causing the calender 1 to manufacture such a sheet-like product S2 that films of the materials M1, M2 have been formed on the respective surfaces of the substrate S1 (refer to FIG. 2). At this time, the control unit 26 controls, based on a signal from the distance sensor 34, the respective hydraulic cylinders 18A, 18B, 18D so that the gap between the adjacent rolls 12A, 12B, a gap between the adjacent rolls 12B, 12C, and the gap between the adjacent rolls 12C, 12D become constant.

For example, when the gap between the adjacent rolls 12A, 12B measured by the distance sensor 34 is smaller than a target value, the axle box 14A is pulled close to the hydraulic cylinder 18A so that the roll 12A separates from the roll 12B. On the other hand, when the gap between the adjacent rolls 12A, 12B measured by the distance sensor 34 is larger than the target value, the axle box 14A is pushed by the hydraulic cylinder 18A so that the roll 12A approaches the roll 12B.

In the above-mentioned present embodiment, the sensor unit 24A is interposed between the axle box 14A and the axle box 14B and in contact with both the axle box 14A and the axle box 14B. The sensor unit 24A includes: the distance sensor 34 including the extension/contraction part 34a that extends and contracts in one direction in which the axle boxes 14A, 14B are aligned; the case 36 holding the distance sensor 34; and the case 38 abutting on the extension/contraction part 34a and attached to the case 36 slidably along the one direction. Therefore, when the axle boxes 14A, 14B approach each other, the case 38 slides in the one direction by the extent of the approach, whereby the extension/contraction part 34a contracts in the one direction. On the other hand, when the axle boxes 14A, 14B separate from each other, the case 38 slides in the one direction by the extent of the separation, whereby the extension/contraction part 34a extends in the one direction. In this manner, a moving amount of the axle boxes 14A, 14B in the one direction can be directly measured as the extension/contraction amount of the extension/contraction part 34a. By using the sensor unit 24A, therefore, the gap between the rolls 12A, 12B can be detected with very high accuracy. Specifically, although accuracy obtained when using a non-contact type distance sensor described in Patent Literature 1 is, for example, equal to or more than 10 µm, accuracy obtained when directly measuring, as the extension/contraction amount by using the extension/contraction part 34a, the moving amount of the axle boxes 14A, 14B in the one direction is, for example, around 1 µm. As a result, the control unit 26 controls the hydraulic cylinder 18A based on the extension/contraction amount, whereby control with very high accuracy is realized for the gap between the rolls 12A, 12B.

In the present embodiment, the two sensor units 24A are arranged such that the virtual straight line connecting the shaft of the roll 12A and the shaft of the roll 12B is positioned between the two sensor units 24A. Therefore, even if one of the axle boxes 14A, 14B is inclined with respect to the other, the gap between the rolls 12A, 12B can be detected with very high accuracy by using, for example, an average of two values of the extension/contraction amount measured by the two sensor units 24A.

In the present embodiment, the inner cylindrical part 36a (case 36) is fixed to the axle box 14A. The bottom wall 38b (case 38) is not fixed to the axle box 14B, and includes the outer surface F2 that is movable within the surface of the axle box 14B while abutting on the surface. Therefore, even if one of the rolls 12A, 12B moves so as to be displaced with respect to the other in a virtual plane orthogonal to the one direction (extension/contraction direction of the extension/contraction part 34a), the outer surface F2 also moves, following to that movement, within the surface of the axle box 14B while abutting on the surface. Therefore, occurrence of a load on the sensor unit 24A in a direction along the virtual plane can be suppressed. Since the extension/contraction direction of the extension/contraction part 34a is maintained in the one direction, even when the above-mentioned displacement occurs between the rolls 12A, 12B, the gap between the rolls 12A, 12B can be detected with very high accuracy.

Since the rolls 12A, 12B are heated during operation of the calender 1, if the distance sensor 34 is heated by that heat, an output value from the distance sensor 34 might fluctuate due to a temperature drift. In the present embodiment, however, the through holes HI, H2 are formed in the inner cylindrical part 36a as the supply paths for supplying cooling gas to the distance sensor 34 (sensor body part 34b). This allows the distance sensor 34 to be cooled down by the cooling gas through the through holes HI, H2. Therefore, the gap between the rolls 12A, 12B can be detected with higher accuracy.

Although the present embodiment has been described in detail so far, the present invention is not limited to the above-mentioned embodiment.

At least one sensor unit may be interposed between a pair of adjacent axle boxes.

In a case where heat is hardly generated around the distance sensor 34 at the time of the operation of the apparatus, the sensor unit 24A may not include the supply path for cooling down the distance sensor 34.

Instead of cooling down the distance sensor with cooling gas through the through holes HI, H2, the cases 36, 38 may be formed of heat insulating materials or the like. In this case, since the heat applied to the distance sensor 34 can be reduced, the influence of the temperature drift can be suppressed. Therefore, the gap between the rolls 12A, 12B can be detected with higher accuracy.

The calender 1 may include a pressure converter that converts, into an electric signal, a pressure applied by each of the rolls 12A, 12B, 12D to the corresponding hydraulic cylinders 18A, 18B, 18D.

Although the calender 1 has been described in the above-mentioned embodiment, the present invention can be widely applied to a rolling mill that rolls a material with a pair of adjacent rolls.

### Reference Signs List

- 1: calender
- 12A to 12D: roll
- 14A to 14D: axle box
- 18A, 18B, 18D: hydraulic cylinder
- 22A, 22D: roll cross mechanism
- 24A, 24B, 24D: sensor unit
- 26: control unit
- 34: distance sensor
- 34a: extension/contraction part
- 34b: sensor body part
- 36, 38: case
- 36a: inner cylindrical part
- 36b: bottom wall
- 38a: cylindrical part
- 38b: bottom wall
- H1, H2: through hole
- F2: outer surface

## Claims

1. A rolling mill (1) comprising:
first and second rolls (12A, 12B) adjacent to each other;
a first axle box (14A) rotatably supporting a shaft of the first roll (12A);
a second axle box (14B) rotatably supporting a shaft of the second roll (12B) and adjacent to the first axle box (14A);
an adjustment part (18A) configured to adjust a position of the first axle box (14A) so as to bring the first roll (12A) and the second roll (12B) close to or apart from each other;
a sensor unit (24A) interposed between the first axle box (14A) and the second axle box (14B) and in contact with both the first axle box (14A) and the second axle box (14B);
a control unit (26), wherein
the sensor unit (24A) includes a distance sensor (34) including an extension/contraction part (34a) configured to extend and contract in one direction in which the first and second axle boxes (14A, 14B) are aligned, and
the control unit (26) is configured to control the adjustment part (18A) based on an extension/contraction amount of the extension/contraction part (34a),
the sensor unit (24A) further includes:
a first member (36) holding the distance sensor (34); and
the rolling mill (1) is **characterized in that** the sensor unit (24A) further includes a second member (38) abutting on the extension/contraction part (34a) and attached to the first member (36) slidably along the one direction,
one of the first and second members (36, 38) is fixed to one of the first and second axle boxes (14A, 14B), and
the other of the first and second members (38, 36) is not fixed to the other of the first and second axle boxes (14B, 14A) and includes a contact surface (F2) that is movable within a surface of the other of the first and second axle boxes (14B, 14A) while abutting on the surface.

2. The rolling mill according to claim 1, wherein
two sensor units (24A) are arranged such that a virtual straight line connecting the shaft of the first roll (12A) and the shaft of the second roll (12B) is positioned between the two sensor units (24A).

3. The rolling mill according to claim 1 or 2, wherein
the or each sensor unit (24A) further includes a supply path (H1, H2) for supplying cooling gas to the distance sensor (34).

## Patentansprüche

1. Walzwerk (1), umfassend:
eine erste und zweite Walze (12A, 12B), welche aneinander liegen;
ein erstes Achslager (14A), welches eine Welle der ersten Walze (12A) drehbar lagert;
ein zweites Achslager (14B), welches eine Welle der zweiten Walze (12B) drehbar lagert und an dem ersten Achslager (14A) anliegt;
einen Einstellteil (18A), welcher konfiguriert ist, um eine Position des ersten Achslagers (14A) einzustellen, damit die erste Walze (12A) und die zweite Walze (12B) näher zueinander oder weg voneinander bewegt werden;
eine Sensoreinheit (24A), welche zwischen dem ersten Achslager (14A) und dem zweiten Achslager (14B) und in Kontakt sowohl mit dem ersten Achslager (14A) als auch mit dem zweiten Achslager (14B) angeordnet ist;
eine Steuereinheit (26), wobei
die Sensoreinheit (24A) einen Abstandssensor (34) umfasst, welcher einen Ein/Ausfahrteil (34A) umfasst, welcher konfiguriert ist, um in eine Richtung einzufahren und auszufahren, in welcher das erste und das zweite Achslager (14A, 14B) ausgerichtet sind, und
die Steuereinheit (26) konfiguriert ist, um den Einstellteil (18A) auf der Basis eines Ein/Ausfahrbetrags des Ein/Ausfahrteils (34a) zu steuern,
wobei die Sensoreinheit (24A) ferner umfasst:
ein erstes Glied (36), welches den Abstandssensor (34) hält; und
wobei das Walzwerk (1) **dadurch gekennzeichnet ist, dass** die Sensoreinheit (24A) ferner umfasst
ein zweites Glied (38), welches an dem Ein/Ausfahrteil (34) anliegt und am ersten Glied (36) entlang der Richtung gleitend befestigt ist,
eines des ersten und zweiten Glieds (36, 38) an einem des ersten und zweiten Achslagers (14A, 14B) befestigt ist, und
das andere des ersten und zweiten Glieds (38, 36) mit dem anderen des ersten und zweiten Achslagers (14A, 14B) nicht befestigt ist und eine Kontaktfläche (F2) umfasst, welche innerhalb einer Oberfläche des anderen des ersten und zweiten Achslagers (14B, 14A) beweglich ist, während es an der Oberfläche anliegt.

2. Walzwerk nach Anspruch 1, wobei
zwei Sensoreinheiten (24A) so angeordnet sind, dass eine virtuelle gerade Linie, welche die Welle der ersten Walze (12A) mit der Welle der zweiten Walze (12B) verbindet, zwischen den zwei Sensoreinheiten (24A) angeordnet ist.

3. Walzwerk nach Anspruch 1 oder 2, wobei
die oder jede Sensoreinheit (24A) ferner einen Zuführweg (H1, H2) umfasst, um Kühlungsgas dem Abstandssensor (34) zuzuführen.

## Revendications

1. Laminoir (1), comprenant :
des premier et deuxième rouleaux (12A, 12) adjacents l'un à l'autre ;
une première boîte d'essieu (14A) supportant de manière rotative un arbre du premier rouleau (12A) ;
une deuxième boîte d'essieu (14B) supportant de manière rotative un arbre du deuxième rouleau (12) et adjacente à la première boîte d'essieu (14A) ;
une partie d'ajustement (18A) configurée pour ajuster une position de la première boîte d'essieu (14), de sorte à rapprocher ou à éloigner le premier rouleau (12A) et le deuxième rouleau (12B) l'un de l'autre ;
une unité de capteur (24A) agencée entre la première boîte d'essieu (14A) et la deuxième boîte d'essieu (14B) et en contact avec la première boîte d'essieu (14A) et la deuxième boîte d'essieu (14B) ;
une unité de commande (26), dans laquelle :
l'unité de capteur (24A) inclut un capteur de distance (34) incluant une partie d'extension/de contraction (34A) configurée pour s'étendre et se contracter dans une direction dans laquelle les première et deuxième boîtes d'essieu (14A, 14B) sont alignées ; et
l'unité de commande (26) est configurée pour contrôler la partie d'ajustement (18A) sur la base d'une distance d'extension/de contraction de la partie d'extension/de contraction (34A) ;
l'unité de commande (24A) inclut en outre :
un premier élément (36) supportant le capteur de distance (34) ; et
le laminoir étant **caractérisé en ce que** l'unité de capteur (24A) inclut en outre :
un deuxième élément (38) butant contre la partie d'extension/de contraction (34a) et fixé sur le premier élément (36) de sorte à pouvoir coulisser le long de ladite une direction ;
un des premier et deuxième éléments (36, 38) est fixé sur l'une des première et deuxième boîtes d'essieu (14A, 14B) ; et
l'autre des premier et deuxième éléments (38, 36) n'est pas fixé sur l'autre des première et deuxième boîtes d'essieu (14A, 14B) et inclut une surface de contact (F2) pouvant se déplacer dans une surface de l'autre des première et deuxième boîtes d'essieu (14B, 14A) tout en butant contre la surface.

2. Laminoir selon la revendication 1, dans lequel :
deux unités de capteur (24A) sont agencées de sorte qu'une ligne droite virtuelle connectant l'arbre du premier rouleau (12A) et l'arbre du deuxième rouleau (12B) est positionnée entre les deux unités de capteur (24A).

3. Laminoir selon les revendications 1 ou 2, dans lequel :
la ou chaque unité de capteur (24A) inclut en outre un trajet d'alimentation (H1, H2) pour fournir du gaz de refroidissement au capteur de distance (34).
